# EUROPÄISCHE PATENTANMELDUNG

(11) **EP 3 906 766 A1**
(43) Veröffentlichungstag der Anmeldung: **10.11.2021**
(21) Anmeldenummer: 21156582.5
(22) Anmeldetag: 11.02.2021
(51) Int. Cl.: A01B 71/02, A01B 69/04, G05D 1/02

(54) **LANDWIRTSCHAFTLICHES ASSISTENZSYSTEM**

(30) Priorität: 06.05.2020 DE 102020112302
(71) Anmelder: CLAAS Selbstfahrende Erntemaschinen GmbH, 33428 Harsewinkel (DE)
(72) Erfinder: Meyer, Lennart, 52072 Aachen (DE); Berger, Arthur, 49143 Bissendorf (DE); Dieckmeyer, Sascha, 49326 Melle (DE); Metker, Dirk, 49186 Bad Iburg (DE); Schramm, Johanna, 49082 Osnabrück (DE)
(74) Vertreter: CLAAS Gruppe

(57) **Zusammenfassung**

Die Erfindung betrifft ein landwirtschaftliches Assistenzsystem mit einem Fahrerassistenzsystem (2) zur Ansteuerung einer insbesondere als Traktor ausgestalteten Zugmaschine (3) und/oder eines Anbaugeräts (4) eines landwirtschaftlichen Gespanns (5), wobei das landwirtschaftliche Assistenzsystem (1) Steuerparameter für die Zugmaschine (3), insbesondere für eine Maschinensteuerung (6) der Zugmaschine (3), und/oder für das Anbaugerät (4), insbesondere für eine Gerätesteuerung (10) des Anbaugerätes (4), erzeugt, wobei das Fahrerassistenzsystem (2) eine Ein-/Ausgabeeinheit (11) für den Dialog mit einem Benutzer (B) aufweist, wobei das landwirtschaftliche Assistenzsystem (1), insbesondere das Fahrerassistenzsystem (2), einen Regelinterpreter (12) aufweist, der die Steuerparameter erzeugt, indem er Regeln eines Regelwerks (13) abarbeitet, wobei das landwirtschaftliche Assistenzsystem (1) einen Regelgenerator (14) aufweist, der eine Mehrzahl von Regelwerken (13) betreffend die Zugmaschine (3) und/oder das Anbaugerät (4) bereitstellt. Es wird vorgeschlagen, dass das landwirtschaftliche Assistenzsystem (1) ein Gespann-Optimierungssystem umfasst, dass der Regelgenerator (14) dem Gespann-Optimierungssystem zumindest einen Teil der Regelwerke (13) übermittelt und, dass das Gespann-Optimierungssystem nach einer vorbestimmten Optimierungsstrategie aus mindestens zwei der Regelwerke (13) ein auf einen spezifischen Anwendungsfall ausgerichtetes neues Regelwerk (13) erzeugt.

## Beschreibung

Die vorliegende Erfindung betrifft ein landwirtschaftliches Assistenzsystem gemäß dem Oberbegriff von Anspruch 1.

Der bekannte Stand der Technik (DE 10 2017 130 146 A1), von dem die Erfindung ausgeht, betrifft ein landwirtschaftliches Assistenzsystem gemäß dem Oberbegriff von Anspruch 1.

Anwendung findet das in Rede stehende Assistenzsystem bei der Ansteuerung einer Zugmaschine und/oder eines Anbaugeräts, die insbesondere ein landwirtschaftliches Gespann bilden. Die Zugmaschine ist hier und vorzugsweise ein Traktor. Das Anbaugerät kann an die Zugmaschine angekoppelt sein. Dabei kann ein und derselbe Traktor mit den unterschiedlichsten Anbaugeräten kombiniert werden. Bei solchen Anbaugeräten handelt es sich beispielsweise um Mähwerke, Ballenpressen, Schwader, Wender, Bodenbearbeitungsgeräte, Düngerstreuer oder dergleichen.

Für eine optimale Ansteuerung des landwirtschaftlichen Gespanns unter bestimmten Optimierungskriterien wird der Zugmaschine ein Fahrerassistenzsystem zugeordnet. Bei solchen Fahrerassistenzsystemen ist erkannt worden, dass für eine optimierte Ansteuerung des Gespanns die Kenntnis bestimmter Eigenschaften der Zugmaschine einerseits und des Anbaugeräts andererseits unverzichtbar ist.

Es sind Fahrerassistenzsysteme bekannt, bei denen Steuerparameter für die Zugmaschine und/oder für das Anbaugerät erzeugt werden, wobei das Fahrerassistenzsystem eine Ein-/Ausgabeeinheit für den Dialog mit dem Bediener aufweist. Die erzeugten Steuerparameter werden vorzugsweise an eine Maschinensteuerung der Zugmaschine und/oder an eine Gerätesteuerung des Anbaugeräts, sofern vorhanden, geleitet. Eine Änderung der Steuerparameter bewirkt dann eine entsprechende Änderung der Maschineneinstellungen und/oder Geräteeinstellungen. Die Änderung der Steuerparameter kann vollautomatisch oder über eine Bedienereingabe vorgesehen sein. Im letztgenannten Fall kann der Bediener beispielsweise über die Ein-/Ausgabeeinheit aufgefordert werden, entsprechende Eingaben vorzunehmen.

Es sind Fahrerassistenzsysteme bekannt, die eine regelbasierte Steuerung aufweisen. Solche regelbasierten Steuersysteme weisen einen generischen Regelinterpreter auf, der zur Abarbeitung der Regeln eines Regelwerks eingerichtet ist. Die Regeln gehen dabei vorzugsweise auf einfache "Wenn-Dann-Bedingungen" zurück. Zur Abarbeitung des Regelwerks werden dem Regelinterpreter Eingangsparameter zugeführt, auf die der Regelinterpreter die Regeln des Regelwerks anwendet. Das Ergebnis sind Ausgangsparameter, die sich aus den Eingangsparametern einerseits und dem Regelwerk andererseits ergeben. Die Regeln des Regelwerks sind von einem standardisierten Format, so dass gänzlich unbekannte Regeln von dem Regelinterpreter in reproduzierbarer Weise abgearbeitet werden können.

Zur Abarbeitung des Regelwerks werden dem Regelinterpreter Eingangsparameter zugeführt, auf die der Regelinterpreter die Regeln des Regelwerks anwendet. Das Ergebnis sind Ausgangsparameter, die sich aus den Eingangsparametern einerseits und dem Regelwerk andererseits ergeben. Die Regeln des Regelwerks sind von einem standardisierten Format, so dass gänzlich unbekannte Regeln von dem Regelinterpreter in reproduzierbarer Weise abgearbeitet werden können.

Dabei handelt es sich bei dem Regelinterpreter um eine generische Einheit, die unabhängig von der Ausgestaltung von Zugmaschine und Anbaugerät ausgestaltet ist. Das Regelwerk dagegen repräsentiert die zugmaschinenspezifischen und/oder anbaugerätespezifischen Eigenschaften.

Es ist auch bekannt, dass die Regelwerke von einem Regelgenerator zur Verfügung gestellt werden. Dieser kann dabei zumindest eine Datenbank umfassen.

Es kommt häufig vor, dass eine Vielzahl an Regelwerken und Regeln existiert, die wenigstens teilweise miteinander konkurrieren, also nicht gleichzeitig angewendet werden können. Da nicht für jeden Anwendungsfall wie beispielsweise die Nutzung eines spezifischen Anbaugeräts mit einer spezifischen Zugmaschine bei einer spezifischen landwirtschaftlichen Tätigkeit bereits ein Regelwerk existiert, ist auch bekannt, ein Zugmaschinenregelwerk und ein Anbaugeräteregelwerk miteinander zu kombinieren. Eine Herausforderung besteht jedoch darin, dass bei dieser Kombination, wenn mehrere Regelwerke für die Zugmaschine und für das Anbaugerät zur Verfügung stehen, nicht bekannt ist, welche Kombination der Regelwerke in dem spezifischen Anwendungsfall zu einem guten Ergebnis führt. Weiterhin ist nicht bekannt, wie diese Regelwerke miteinander kombiniert werden sollen, um für den Anwendungsfall ein optimales Ergebnis zu erzielen.

Der Erfindung liegt das Problem zugrunde, das bekannte landwirtschaftliche Assistenzsystem derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Besonders bevorzugte Ausgestaltungen sind Gegenstand der Unteransprüche.

Wesentlich ist die grundsätzliche Überlegung, dass die Regelwerke und/oder deren Regeln anwendungsfallspezifisch kombiniert werden können. So kann beispielsweise ein Regelwerk, das für ein spezifisches Anbaugerät ausgelegt wurde, Regeln enthalten, die in einem seltenen Anwendungsfall nicht sehr effektiv sind. Gleichzeitig kann für diesen Anwendungsfall ein anderes Regelwerk existieren, das jedoch nicht für dieses Anbaugerät erstellt worden ist, wodurch dieses Anbaugerät in diesem Anwendungsfall nicht optimal genutzt wird. Durch gezielte Kombination solcher Regelwerke für einen spezifischen Anwendungsfall kann ein neues Regelwerk erzeugt werden, in dem die Stärken der ursprünglichen Regelwerke in diesem Anwendungsfall beibehalten werden, während ihre Schwächen in diesem Anwendungsfall vermieden oder jedenfalls reduziert werden.

Im Einzelnen wird vorgeschlagen, dass das landwirtschaftliche Assistenzsystem ein Gespann-Optimierungssystem umfasst, dass der Regelgenerator dem Gespann-Optimierungssystem zumindest einen Teil der Regelwerke übermittelt und, dass das Gespann-Optimierungssystem nach einer vorbestimmten Optimierungsstrategie aus mindestens zwei der Regelwerke ein auf einen spezifischen Anwendungsfall ausgerichtetes neues Regelwerk erzeugt.

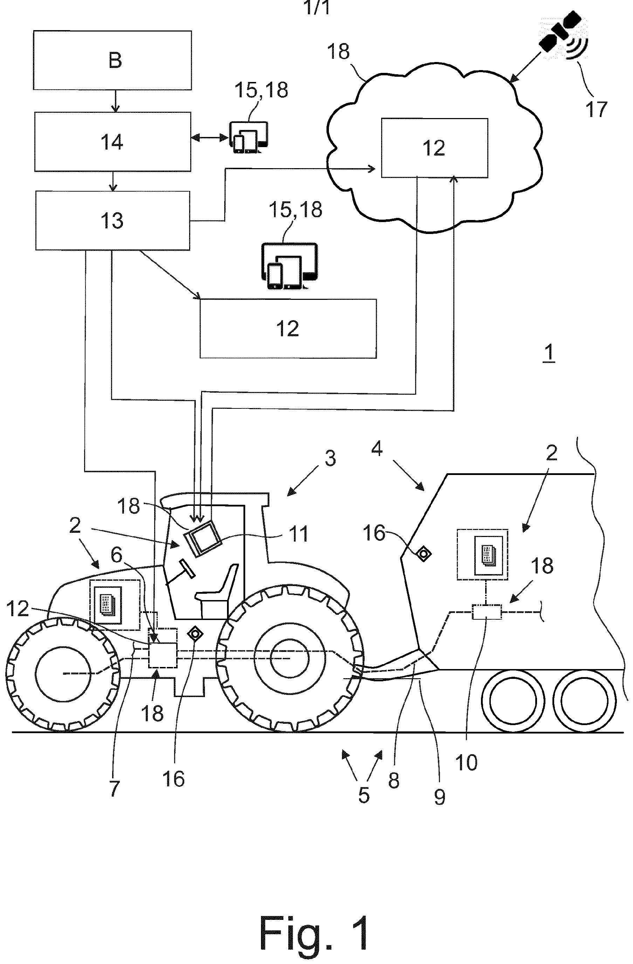

Im Folgenden wird die Erfindung anhand einer lediglich Ausführungsbeispiele darstellenden Zeichnung näher erläutert. In der Zeichnung zeigt
- Fig. 1: eine schematische Darstellung eines landwirtschaftlichen Gespanns mit einem vorschlagsgemäßen landwirtschaftlichen Assistenzsystem.

Das vorschlagsgemäße landwirtschaftliche Assistenzsystem 1 weist ein Fahrerassistenzsystem 2 auf. Das Fahrerassistenzsystem 2 dient der Ansteuerung einer insbesondere als Traktor ausgestalteten Zugmaschine 3 und/oder eines Anbaugeräts 4 eines landwirtschaftlichen Gespanns 5.

Bei dem Anbaugerät 4 kann es sich um jedwedes Anbaugerät 4 handeln, das mit einer Zugmaschine 3 koppelbar ist. Bei dem dargestellten Ausführungsbeispiel handelt es sich bei dem Anbaugerät 4 um eine Ballenpresse, mit der sich Heu, Stroh oder dergleichen zu Ballen pressen lässt.

Die dargestellte Zugmaschine 3 weist eine Maschinensteuerung 6 auf, mit der sich Maschineneinstellungen wie die Motordrehzahl des Zugmaschinenmotors 7, die Drehzahl bzw. das Drehmoment der Zapfwelle 8 der Zugmaschine 3, die Heberhöhe eines Heckkrafthebers 9 oder dergleichen verändern lassen. Der Maschinensteuerung 6 werden die von dem landwirtschaftlichen Assistenzsystem 1 erzeugten Steuerparameter zugeführt.

Hier und vorzugsweise ist auch das Anbaugerät 4 mit einer eigenen Steuerung, hier einer Gerätesteuerung 10, ausgestattet, der die vom landwirtschaftlichen Assistenzsystem 1 erzeugten Steuerparameter zugeführt werden. Diese Zuführung der Steuerparameter kann vollautomatisch oder über einen Bediener B, beispielsweise, indem der Bediener B die Änderung von Steuerparametern über eine Ein-/Ausgabeeinheit 11 freigibt oder über die Ein-/Ausgabeeinheit 11 eingibt, vollzogen werden.

Das in den Figuren dargestellte und insoweit bevorzugte Ausführungsbeispiel betrifft ein landwirtschaftliches Assistenzsystem 1 mit einem Fahrerassistenzsystem 2 zur Ansteuerung einer insbesondere als Traktor ausgestalteten Zugmaschine 3 und/oder eines Anbaugeräts 4 eines landwirtschaftlichen Gespanns 5, wobei das landwirtschaftliche Assistenzsystem 1 Steuerparameter für die Zugmaschine 3, insbesondere für eine Maschinensteuerung 6 der Zugmaschine 3, und/oder für das Anbaugerät 4, insbesondere für eine Gerätesteuerung 10 des Anbaugerätes 4, erzeugt, wobei das Fahrerassistenzsystem 1 eine Ein-/Ausgabeeinheit 11 für den Dialog mit einem Benutzer B aufweist, wobei das landwirtschaftliche Assistenzsystem 1, insbesondere das Fahrerassistenzsystem 2, einen Regelinterpreter 12 aufweist, der die Steuerparameter erzeugt, indem er Regeln eines Regelwerks 13 abarbeitet, wobei das landwirtschaftliche Assistenzsystem 1 einen Regelgenerator 14 aufweist, der eine Mehrzahl von Regelwerken betreffend die Zugmaschine und/oder das Anbaugerät bereitstellt.

Der Begriff "Regelgenerator" ist hier weit zu verstehen. Im einfachsten Fall stellt der Regelgenerator 14 die Regelwerke 13 nur aus einem Speicher zur Verfügung. Die bevorzugte Ausführungsform wird noch erläutert.

Die Ein-/Ausgabeeinheit 11 kann hier und vorzugsweise an der Zugmaschine 3 angeordnet sein. Genauso vorteilhaft kann sie jedoch auch durch ein mobiles Gerät 15 gebildet werden. Das Fahrerassistenzsystem 2 ist, wie dargestellt, hier und vorzugsweise an dem landwirtschaftlichen Gespann 5, insbesondere an der Zugmaschine 3, angeordnet.

Der Regelinterpreter 12 erzeugt die Steuerparameter aus Regelwerken 13, die ganz unterschiedliche Regeln beinhalten können. Diese Regeln können die Zugmaschine 3, das Anbaugerät 4 und/oder das landwirtschaftliche Gespann 5 betreffen. Sie können unterschiedliche Eingangsdaten aus Sensoren 16 und externen Quellen 17 berücksichtigen und unterschiedliche Komplexitäten aufweisen. Zur Verfügung gestellt werden die Regelwerke 13 von dem Regelgenerator 14, der hier und vorzugsweise zumindest eine Datenbank umfasst. Besonders bevorzugt ist, dass der Regelgenerator 14 eine webbasierte Serverplattform ist, auf der Regelwerke 13 von verschiedenen Benutzern B erstellt werden können. Für die Zwecke des vorschlagsgemäßen landwirtschaftlichen Assistenzsystems 1 können die Regelwerke 13 jedoch auch bereits als erstellt betrachtet werden und lediglich zur Verfügung gestellt werden.

Der Regelinterpreter 12 kann, wie in der Fig. 1 gezeigt, grundsätzlich auf beliebiger Steuerungshardware 18 ausgeführt werden. In einer nicht dargestellten jedoch ebenso bevorzugten Ausführungsform ist der Regelinterpreter 12 hier jedoch Teil des Fahrerassistenzsystems 2 und wird somit vorzugsweise auf Steuerungshardware 18 der Zugmaschine 3 und/oder des Anbaugeräts 4 ausgeführt. Die dem Regelinterpreter 12 von dem Regelgenerator 14 zur Verfügung gestellten Regelwerke 13 umfassen hier und vorzugsweise eine Vielzahl von Regelwerken 13 betreffend die Zugmaschine 3 und/oder eine Vielzahl von Regelwerken 13 betreffend das Anbaugerät 4 und/oder eine Vielzahl von Regelwerken 13 betreffend das landwirtschaftliche Gespann 5 aus Zugmaschine 3 und Anbaugerät 4.

Wesentlich ist nun, dass das landwirtschaftliche Assistenzsystem 1 ein Gespann-Optimierungssystem umfasst, dass der Regelgenerator 14 dem Gespann-Optimierungssystem zumindest einen Teil der Regelwerke 13 übermittelt und, dass das Gespann-Optimierungssystem nach einer vorbestimmten Optimierungsstrategie aus mindestens zwei der Regelwerke 13 ein auf einen spezifischen Anwendungsfall ausgerichtetes neues Regelwerk 13 erzeugt.

Das Gespann-Optimierungssystem ist insofern funktional zwischen dem Regelgenerator 14 und dem Regelinterpreter 12 angeordnet. Es kann dabei dem Regelgenerator 14 oder dem Regelinterpreter 12 zugeordnet sein, oder eine eigene funktionale Einheit bilden.

Hier und vorzugsweise arbeitet das Gespann-Optimierungssystem die Optimierungsstrategie ab und bildet aus mindestens zwei der Regelwerke 13 durch Selektion diverser Regeln der Regelwerke 13 das neue Regelwerk 13. Diese Selektion der Regeln folgt hier und vorzugsweise der Optimierungsstrategie. Beispielsweise können dabei aus einem Regelwerk 13, das einen spezifischen Typ des Anbaugeräts 4 betrifft, Regeln selektiert werden, die bezüglich der allgemeinen Ansteuerung des Anbaugeräts 4 in dem Anwendungsfall als effizient betrachtet werden. Zusätzlich können aus einem weiteren Regelwerk 13, das ebenfalls das Anbaugerät 4 betreffen kann, Regeln ausgewählt werden, die zwar nicht für den spezifischen Typ des Anbaugeräts 4 optimiert sind, jedoch allgemein eine höhere Spezifität bezüglich der spezifischen Arbeitsaufgabe im spezifischen Anwendungsfall aufweisen. Der Anwendungsfall kann dabei beispielsweise ein Pflügen nach einer bestimmten Methode eines Feldes mit einem spezifischen landwirtschaftlichen Gespann 5 sein.

Bei dem in Fig. 1 dargestellten und insoweit bevorzugten Ausführungsbeispiel ist ferner vorgesehen, dass die vorbestimmte Optimierungsstrategie eine Optimierung des neuen Regelwerks 13 hinsichtlich einer Optimierungsgröße basierend auf einer anwendungsfallabhängigen Bewertung der Regelwerke 13 und/oder der Regeln der Regelwerke 13 umfasst, vorzugsweise, dass die Bewertung der Regelwerke 13 und/oder der Regeln einer Bewertung einer Spezifität des Regelwerks 13 und/oder der Regeln bezüglich des landwirtschaftlichen Gespanns 5 und/oder der Zugmaschine 3 und/oder des Anbaugeräts 4 und/oder des Anwendungsfalls umfasst, und/oder, dass die Optimierungsgröße eine Anwendung des neuen Regelwerks 13 in dem Anwendungsfall betrifft und dass das Gespann-Optimierungssystem die Optimierungsgröße in der Optimierungsstrategie optimiert, insbesondere maximiert oder minimiert.

Die Optimierungsgröße kann beispielsweise eine Optimierung eines Ernteergebnisses oder eine Reduzierung eines Kraftstoffverbrauches und dergleichen betreffen. Auch Kombinationen verschiedener derartiger Optimierungsgrößen zu einer zusammengesetzten Optimierungsgröße sind denkbar.

Die Bewertung der Regelwerke 13 und/oder Regeln kann bezüglich verschiedener Kriterien erfolgen. Beispielsweise kann auch ein Regelwerk 13 für ein Anbaugerät 4 vorgesehen sein, das hinsichtlich des Ernteerfolges besonders spezifisch ist, jedoch keine zufriedenstellenden Regeln bezüglich des Einsparens von Kraftstoff aufweist. Durch eine Bewertung, welche Regeln sich wie auf die Optimierungsgröße auswirken, kann dann ein neues Regelwerk 13 erstellt werden, das an die gewünschte Optimierungsgröße angepasst ist.

Weiter ist hier und vorzugsweise vorgesehen, dass das Gespann-Optimierungssystem eine Bewertungseinheit aufweist, die die situationsabhängigen Bewertungen der Regelwerke 13 und/oder der Regeln teilautomatisiert und/oder vollautomatisiert erzeugt, vorzugsweise, dass der Regelgenerator 14 die Bewertung der Regelwerke 13 und/oder der Regeln von dem Regelgenerator 14 an das Gespann-Optimierungssystem übermittelt, und/oder, dass die Bewertungseinheit und insbesondere das Gespann-Optimierungssystem Teil des Fahrerassistenzsystems 2 ist.

Das Erstellen des neuen Regelwerks 13 kann vollautomatisiert erfolgen, es kann jedoch auch vorgesehen sein, dass der Benutzer B in diese Erstellung eingebunden wird.

Darüber hinaus ist hier und vorzugsweise vorgesehen, dass der Regelgenerator 14 auf einer gespannfernen Steuerungshardware 18 und/oder auf einer Steuerungshardware 18 der Zugmaschine 3 und/oder des Anbaugeräts 4 ausgeführt wird, und/oder, dass das Gespann-Optimierungssystem das neue Regelwerk 13 dialogbasiert erzeugt, indem das Gespann-Optimierungssystem einem Benutzer B Vorschläge, insbesondere betreffend Regeln des neuen Regelwerks 13, anzeigt und die Vorschläge von dem Benutzer B akzeptiert oder abgelehnt oder bearbeitet werden, vorzugsweise, dass das Gespann-Optimierungssystem die Vorschläge basierend auf der Bewertung der Regelwerke 13 und/oder Regeln erzeugt.

Hier und vorzugsweise werden dem Benutzer B über die Ein-/Ausgabeeinheit 11 von der Bewertungseinheit Vorschläge gemacht, wie Regeln und/oder Regelwerke 13 zu bewerten sind, die der Benutzer B ablehnen oder akzeptieren oder abändern kann. Zur Einbindung des Benutzers B kann ganz allgemein ein Dialog zwischen dem Benutzer B und dem Gespann-Optimierungssystem vorgesehen sein, bei dem dem Benutzer B verschiedene Informationen, wie Fragen oder Auswahlmöglichkeiten, angezeigt werden und auf die der Benutzer B Benutzereingaben tätigt.

Weiterhin ist hier und vorzugsweise vorgesehen, dass der Anwendungsfall eine landwirtschaftliche Anwendung, insbesondere ein Pflügen, eine Aussaat, eine Ernte oder eine Pflanzenschutzmittelapplikation, und/oder eine Fruchtart eines zu bearbeitenden Feldes und/oder Erntebedingungen betrifft, und/oder, dass der Anwendungsfall eine durch einen Benutzer B vorgegebene Optimierungsgröße umfasst, und/oder, dass der Anwendungsfall eine Kombination einer Zugmaschine 3 und eines Anbaugeräts 4 zu einem landwirtschaftlichen Gespann 5 betrifft. Der Anwendungsfall kann dabei auch eine Kombination dieser Anwendungsfälle betreffen.

### Bezugszeichenliste

- 1: Landwirtschaftliches Assistenzsystem
- 2: Fahrerassistenzsystem
- 3: Zugmaschine
- 4: Anbaugerät
- 5: Landwirtschaftliches Gespann
- 6: Maschinensteuerung
- 7: Zugmaschinenmotor
- 8: Zapfwelle
- 9: Heckkraftheber
- 10: Gerätesteuerung
- 11: Ein-/Ausgabeeinheit
- 12: Regelinterpreter
- 13: Regelwerk
- 14: Regelgenerator
- 15: Mobiles Gerät
- 16: Sensoren
- 17: Externe Quellen
- 18: Steuerungshardware
- B: Benutzer

## Patentansprüche

1. Landwirtschaftliches Assistenzsystem mit einem Fahrerassistenzsystem (2) zur Ansteuerung einer insbesondere als Traktor ausgestalteten Zugmaschine (3) und/oder eines Anbaugeräts (4) eines landwirtschaftlichen Gespanns (5), wobei das landwirtschaftliche Assistenzsystem (1) Steuerparameter für die Zugmaschine (3), insbesondere für eine Maschinensteuerung (6) der Zugmaschine (3), und/oder für das Anbaugerät (4), insbesondere für eine Gerätesteuerung (10) des Anbaugerätes (4), erzeugt, wobei das Fahrerassistenzsystem (2) eine Ein-/Ausgabeeinheit (11) für den Dialog mit einem Benutzer (B) aufweist,
wobei das landwirtschaftliche Assistenzsystem (1), insbesondere das Fahrerassistenzsystem (2), einen Regelinterpreter (12) aufweist, der die Steuerparameter erzeugt, indem er Regeln eines Regelwerks (13) abarbeitet,
wobei das landwirtschaftliche Assistenzsystem (1) einen Regelgenerator (14) aufweist, der eine Mehrzahl von Regelwerken (13) betreffend die Zugmaschine (3) und/oder das Anbaugerät (4) bereitstellt,
**dadurch gekennzeichnet,**
**dass** das landwirtschaftliche Assistenzsystem (1) ein Gespann-Optimierungssystem umfasst, dass der Regelgenerator (14) dem Gespann-Optimierungssystem zumindest einen Teil der Regelwerke (13) übermittelt und, dass das Gespann-Optimierungssystem nach einer vorbestimmten Optimierungsstrategie aus mindestens zwei der Regelwerke (13) ein auf einen spezifischen Anwendungsfall ausgerichtetes neues Regelwerk (13) erzeugt.

2. Landwirtschaftliches Assistenzsystem nach Anspruch 1, **dadurch gekennzeichnet, dass** die vorbestimmte Optimierungsstrategie eine Optimierung des neuen Regelwerks (13) hinsichtlich einer Optimierungsgröße basierend auf einer anwendungsfallabhängigen Bewertung der Regelwerke (13) und/oder der Regeln der Regelwerke (13) umfasst, vorzugsweise, dass die Bewertung der Regelwerke (13) und/oder der Regeln einer Bewertung einer Spezifität des Regelwerks (13) und/oder der Regeln bezüglich des landwirtschaftlichen Gespanns (5) und/oder der Zugmaschine (3) und/oder des Anbaugeräts (4) und/oder des Anwendungsfalls umfasst, und/oder, dass die Optimierungsgröße eine Anwendung des neuen Regelwerks (13) in dem Anwendungsfall betrifft und dass das Gespann-Optimierungssystem die Optimierungsgröße in der Optimierungsstrategie optimiert, insbesondere maximiert oder minimiert.

3. Landwirtschaftliches Assistenzsystem nach Anspruch 1 oder 2, **dadurch gekennzeichnet, dass** das Gespann-Optimierungssystem eine Bewertungseinheit aufweist, die die situationsabhängigen Bewertungen der Regelwerke (13) und/oder der Regeln teilautomatisiert und/oder vollautomatisiert erzeugt, vorzugsweise, dass der Regelgenerator (14) die Bewertung der Regelwerke (13) und/oder der Regeln von dem Regelgenerator (14) an das Gespann-Optimierungssystem übermittelt, und/oder, dass die Bewertungseinheit und insbesondere das Gespann-Optimierungssystem Teil des Fahrerassistenzsystems (2) ist.

4. Landwirtschaftliches Assistenzsystem nach einem der vorhergehenden Ansprüche, **dadurch gekennzeichnet, dass** der Regelgenerator (14) auf einer gespannfernen Steuerungshardware (18) und/oder auf einer Steuerungshardware (18) der Zugmaschine (3) und/oder des Anbaugeräts (4) ausgeführt wird, und/oder, dass das Gespann-Optimierungssystem das neue Regelwerk (13) dialogbasiert erzeugt, indem das Gespann-Optimierungssystem einem Benutzer (B) Vorschläge, insbesondere betreffend Regeln des neuen Regelwerks (13), anzeigt und die Vorschläge von dem Benutzer (B) akzeptiert oder abgelehnt oder bearbeitet werden, vorzugsweise, dass das Gespann-Optimierungssystem die Vorschläge basierend auf der Bewertung der Regelwerke (13) und/oder Regeln erzeugt.

5. Landwirtschaftliches Assistenzsystem nach einem der vorhergehenden Ansprüche, **dadurch gekennzeichnet, dass** der Anwendungsfall eine landwirtschaftliche Anwendung, insbesondere ein Pflügen, eine Aussaat, eine Ernte oder eine Pflanzenschutzmittelapplikation, und/oder eine Fruchtart eines zu bearbeitenden Feldes und/oder Erntebedingungen betrifft, und/oder, dass der Anwendungsfall eine durch einen Benutzer (B) vorgegebene Optimierungsgröße umfasst, und/oder, dass der Anwendungsfall eine Kombination einer Zugmaschine (3) und eines Anbaugeräts (4) zu einem landwirtschaftlichen Gespann (5) betrifft.
